Europäisches Patentamt

European Patent Office

Office européen des brevets

(19)

(11) Publication number: **0 399 055**

**A1**

(12)

# EUROPEAN PATENT APPLICATION
## published in accordance with Art. 158(3) EPC

(21) Application number: **90900424.4**

(22) Date of filing: **27.11.89**

(86) International application number:
**PCT/SU89/00295**

(87) International publication number:
**WO 90/06259 (14.06.90 90/14)**

(51) Int. Cl.5: **B64G 1/40, B64G 1/44**

(30) Priority: **02.12.88 SU 4608769**
**31.03.89 SU 4670495**
**31.03.89 SU 4671539**
**03.05.89 SU 4685886**

(43) Date of publication of application:
**28.11.90 Bulletin 90/48**

(84) Designated Contracting States:
**DE FR GB IT SE**

(71) Applicant: **INSTITUT KOSMICHESKIKH ISSLEDOVANY AKADEMII NAUK SSSR**
**ul. Profsojuznaya, 84-32**
**Moscow, 117810(SU)**

(72) Inventor: **AVANESOV, Genrikh Aronovich**
**Novye Cheremushki, 32A-3B-287**
**Moscow, 113209(SU)**
Inventor: **DOLGOPOLOV, Anton Vladimirovich**
**Leningradskoe shosse, 29-50**
**Moscow, 125212(SU)**
Inventor: **ZIMAN, Yan Lvovich**
**Leninsky pr., 77-2-210**
**Moscow, 117261(SU)**
Inventor: **KOGAN, Alexandr Jurievich**
**ul. Vinogradova, 6-100**
**Moscow, 117133(SU)**
Inventor: **KOSTENKO, Valery Ivanovich**
**Vorontsovskie prudy, 19-100**
**Moscow, 117630(SU)**
Inventor: **KUSHNIR, Vladimir Grigorievich**
**Leninsky pr., 9/1-267**
**Moscow, 117630(SU)**
Inventor: **KHEIFETS, Vladimir Naumovich**
**ul. B.Cherkizovskaya, 5-6-50**
**Moscow, 107061(SU)**
Inventor: **VOLKOV, Vyacheslav Sergeevich**
**ul. Marshala Ustinova, 10-276**
**Moscow, 121360(SU)**
Inventor: **AFANASENKO, Viktor Ivanovich ul. K.Marxa, 68-5**
**Pushkin**
**Leningrad, 188620(SU)**
Inventor: **GULEVICH, Kazimir Petrovich**
**ul. Zheleznodorozhnaya, 68-24 Pushkin**
**Leningrad, 188620(SU)**

(74) Representative: **Crawford, Andrew Birkby et al**
**A.A. THORNTON & CO. Northumberland House 303-306 High Holborn**
**London WC1V 7LE(GB)**

(54) **SPACE APPARATUS.**

(57) A space apparatus comprises a casing (1) consisting of an elongated body having the form of a regular polygon in its cross-section. At one end-face of the casing (1) are secured, by their ends, rods (8) forming a frame (7) of a unit (3) for rough solar orientation of the apparatus, on which is fixed a solar sail. The frame (7) has the form of a truncated pyramid and the rods (8) are mounted movably in one of the variants of the apparatus. The steering surfaces (12) of the precise solar orientation unit (4) are mounted on the other end-faces of the rods (8) with the possibility of their rotation about three or-

thogonal axes.

FIG.1

# SPACECRAFT

## Technical Field

The present invention relates to space technology and, more precisely, is concerned with spacecraft intended for exploration of near-solar space and stellar sky photography, particularly for space astrometry.

Space exploration sets special demands on spacecraft, such as high-altitude flights, long service life and minimal contamination of the environment around the craft. Considering these requirements, the most advantageous is a spacecraft with the orientation and stabilization systems using the pressure of solar radiation.

## Prior Art

Known in the art is a spacecraft comprising a body made in the form of an elongated body shaped as a regular polygon in its cross-section and carrying a coarse solar orientation unit made in the form of gas-jet engines; and a fine solar orientation unit made in the form of control surfaces, specifically in the form of flat movable reflectors or solar vanes secured on the end surfaces of solar batteries and compensating for the disturbing moments in the yawing and pitching planes (cf., N.D.Dzhumamaliyev et al. "Introduction to Applied Radiation Celestial Mechanics", pp.138-140. Ilim Publishers, Frunze, 1986).

Use of gas-jet engines, which are structurally complicated and have a limited service life determined by the reliability and life of the working medium, restricts the service life of such craft. In said spacecraft the control surfaces (solar vanes) function as an auxiliary means for enhancing the sensitivity of the orientation system of the entire spacecraft.

Also known is a spacecraft comprising a body made in the form of an elongated body shaped as a regular polygon in its cross-section and carrying a coarse solar orientation unit, a fine solar orientation unit made in the form of control surfaces rotatable about an axis perpendicular to the longitudinal axis of the spacecraft, and optical observation instruments (cf., US, A, 4,426,052).

The foregoing spacecraft is intended for exploration of stars with the aid of optical observation instruments by scanning the stellar sky in the course of rotation about the longitudinal axis of the craft. Initially, the spacecraft is roughly oriented on the sun with the aid of the coarse solar orientation unit and twists around the longitudinal axis. To align the axis of rotation of the spacecraft with the direction required for investigation and forming, with the direction to the Sun, an angle of less than 60°, use is made of the forces arising in the movable control surfaces as a result of the solar radiation pressure exerted thereon. Control of the spacecraft orientation is exercised through deflection of the control surfaces to an angle ensuring the necessary moment to compensate for disturbunces and restore the requisite position of the spacecraft.

The coarse solar orientation unit in said spacecraft is made in the form of a gas-jet system whose running time is determined by the reserve of the working medium and reliability of structural elements, which shortens the service life of said spacecraft and complicates its design.

Besides, operation of the gas-jet system brings about contamination of the environment around the spacecraft with waste matter, which interferes in the work of optical observation instruments.

Considering that the craft rotates around its longitudinal axis, its control requires that the center of mass be located below the control surfaces, which renders it statically unstable, and the moments created by these surfaces allow the spacecraft to be controlled only by the yawing and pitching angles.

Disclosure of the Invention

The present invention is aimed at providing a spacecraft wherein the coarse solar orientation unit would be capable of extending the service life of the spacecraft, simplify its design, reduce contamination of the environment, increase the payload, make the craft statically stable and enable it to turn through the bank angle, which would allow its triaxial stabilization.

This is attained by that in a spacecraft comprising a body made in the form of an elongated body shaped as a regular polygon in its cross-section and carrying a coarse solar orientation unit of the spacecraft, a fine solar orientation unit of the spacecraft made in the form of control surfaces rotatable around an axis perpendicular to the longitudinal axis of the spacecraft, and optical observation instruments, according to the invention, the coarse solar orientation unit of the spacecraft comprises a framework consisting of rods forming a truncated pyramid or a truncated body of revolution with an axis aligned with the longitudinal axis of the spacecraft, which are the edges of the pyramid or form bodies of revolution and whose one ends making up the base of the framework are secured on an end surface of the body opposite to an end surface oriented on the Sun, and also comprises a solar sail secured on this framework symmetrically with the longitudinal axis of the spacecraft, the control surfaces of the fine solar orientation unit being secured on the other end surfaces of the framework rods with the possibility of additional rotation around another two axes perpendicular to the first said axis.

The surface of the solar sail may be absorbing.

It is desirable that the rods of the coarse solar orientation unit of the spacecraft are secured on an end surface of the body with the possibility of displacement in a plane passing through the longitudinal axis of the spacecraft.

It is expedient that the surface of the solar sail opposite to the end surface facing the Sun be reflacting, and the body on the side of the end surface carrying the rods of the coarse solar orientation unit have a cover fitted thereon with the possibility of displacement along the longitudinal axis of the spacecraft, the surface of the cover facing the body being reflecting and forming a telescope with the reflecting surface of the solar sail opposite to the surface facing the Sun.

It is reasonable that the rods of the coarse solar orientation unit be made hollow and their walls facing the Sun be provided with holes.

It is rather reasonable that the holes be located at least on one generatrix of the rods, equidistant from one another.

The rods of the coarse solar orientation unit may be made of carbon plastic.

The control surfaces of the fine solar orientation unit may be shaped as triangles.

It is desirable that the spacecraft incorporate a protective flat and round screen, transparent to sunlight, secured on the body in such a manner that its plane passes through the center of mass of the spacecraft.

The proposed spacecraft has an extended service life, the life of its coarse solar orientation unit with the solar sail being practically unlimited; besides, the spacecraft is simple in design.

According to the invention, the spacecraft has a mass of the coarse solar orientation unit with the solar sail twice as small as that of a traditional coarse solar orientation unit; moreover, the mass of said unit does not depend on the service life of the spacecraft.

Besides, the proposed spacecraft features an exceptional ecological cleanness, thereby providing favourable conditions for the work of optical observation instruments installed on board the craft, its guaranteed service life being some five years or even longer.

According to the invention, solar orientation allows continuous photography of the solar sky with the aid of optical instruments fitted thereon during the entire period of its existence owing to the fact that with continuous orientation of the longitudinal axis of the spacecraft on the Sun and displacement of the spacecraft on the celestial sphere for six months the optical instruments photograph the entire celestial sphere.

Brief Description of the Drawings

The invention will now be explained with reference to specific embodiments thereof taken in conjunction with the accompanying drawings, wherein:

Fig. 1 illustrates a general view of a spacecraft, axonometric projection, according to the invention;

Fig. 2 shows the same as in Fig. 1 (front view, reduced scale);

Fig. 3 is the same as in Fig. 1 (bottom view, reduced scale);

Fig. 4 is another embodiment of the spacecraft shown in Fig. 1 (axonometric projection);

Fig. 5 is another embodiment of the spacecraft shown in Fig. 4 (axonometric projection);

Fig. 6 shows the same as in Fig. 5 (front view, reduced scale);

Fig. 7 shows the same as in Fig. 5 (bottom view, reduced scale);

Fig. 8 illustrates the same as in Fig. 6, with the body cover drawn out;

Fig. 9 is another embodiment of the spacecraft shown in Fig. 5 (axonometric projection);

Fig. 10 is yet another embodiment of the spacecraft shown in Fig. 1 (front view, reduced scale);

Fig. 11 shows the same as in Fig. 10 (top view);

Fig. 12 is an embodiment of the spacecraft shown in Fig. 1 (axonometric projection);

Fig. 13 shows a rod of the frame of the coarse solar orientation unit of the spacecraft shown in Fig. 12 (front view, partial longitudinal section);

Fig. 14 is an embodiment of a spacecraft shown in Fig. 1 (front view, reduced scale);

Fig. 15 is an embodiment of the spacecraft illustrated in Fig. 5 (front view, reduced scale);

Fig. 16 shows the spacecraft illustrated in Fig. 1 (front view, folded).

Best Modes for Carrying Out the Invention

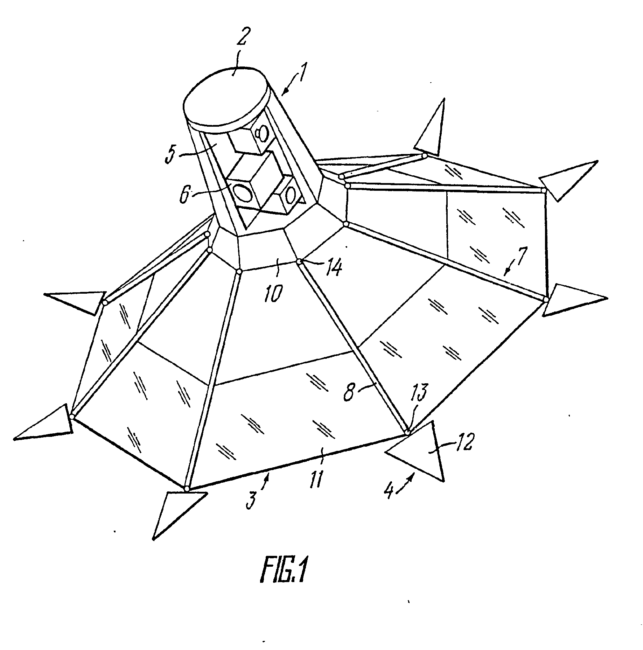

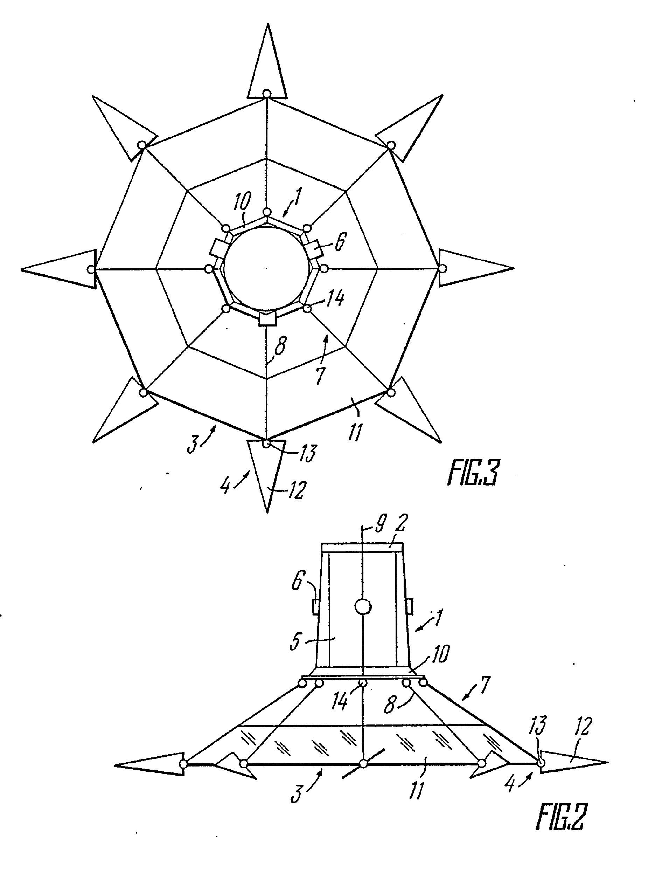

A spacecraft, according to the invention, comprises a body 1 (Fig. 1) made in the form of an elongated body shaped as a regular polygon in its cross-section, in the given embodiment of a spacecraft as a truncated pyramid as shown in Fig. 2. One end surface of the body 1 (Fig. 1), facing the Sun, carries a unit 2 of solar batteries, the opposite end surface, a coarse solar orientation unit 3 of the spacecraft, according to the invention, and a fine solar orientation unit 4 of the spacecraft, according to the invention, and the inside of the body encloses optical observation instruments 6 extending to its outer surface.

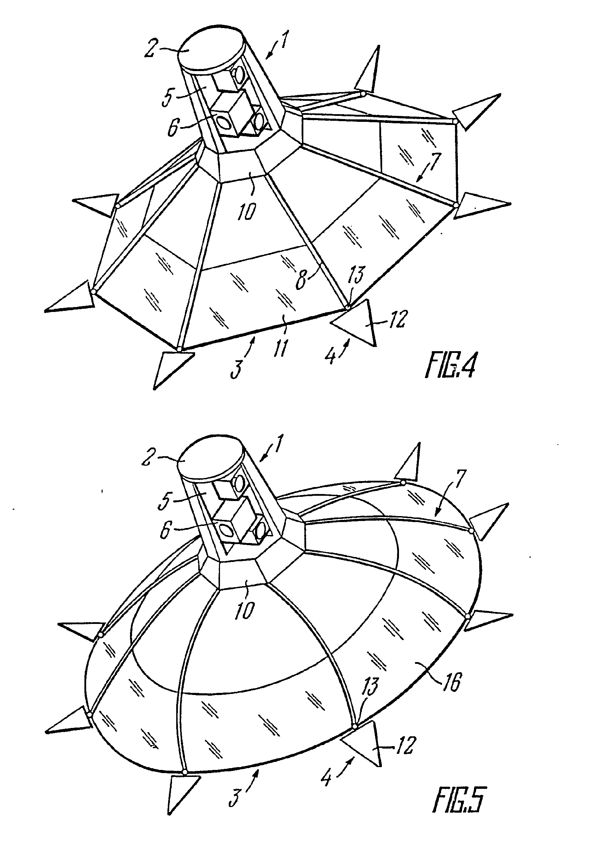

The coarse solar orientation unit 3 comprises a framework 7 including rods 8 forming a truncated pyramid as shown in Figs 2 and 3. This pyramid has an axis coinciding with a longitudinal axis 9 (Fig. 2) of the spacecraft, according to the invention, and edges which are actually the rods 8 of the framework 7. One ends of the rods 8 (Fig. 1) making up the base of the framework 7, are secured on an end surface of the body 1 opposite to an end surface of the body 1 oriented on the Sun, specifically on its flange 10.

Secured on the rods 8 (Fig. 3) of the framework 7 symmetrically with the longitudinal axis 9 (Fig. 2) of the spacecraft, according to the invention, is a solar sail 11 (Figs 1-3) with a reflecting surface facing the Sun, conventionally shaded in the foregoing and subsequent drawings.

The fine solar orientation unit 4 (Fig. 1) of the spacecraft, according to the invention, is made in the form of control surfaces 12 secured, with the aid of hinges 13, on the ends of the rods 8 of the framework 7, opposite to the ends of these rods secured on the flange 10 of the body 1, with the possibility of rotation about three axes, one of which is perpendicular to the longitudinal axis 9 (Fig. 2) of the spacecraft and the other two axes are perpendicular to the first said axis.

The control surfaces 12 are shaped as triangles.

The control surfaces may be of any shape suitable for the given purpose.

In the embodiment of the proposed spacecraft being now described, the rods 8 (Figs 1-3) of the framework 7 are secured, through hinges 14, on the flange 10 of the body 1 with the possibility of displacement in a plane passing through the longitudinal axis 9 of the spacecraft.

The given embodiment of the spacecraft, according to the invention, is preferable in plasma physics research of outer space and in cases requiring a large area of the solar sail.

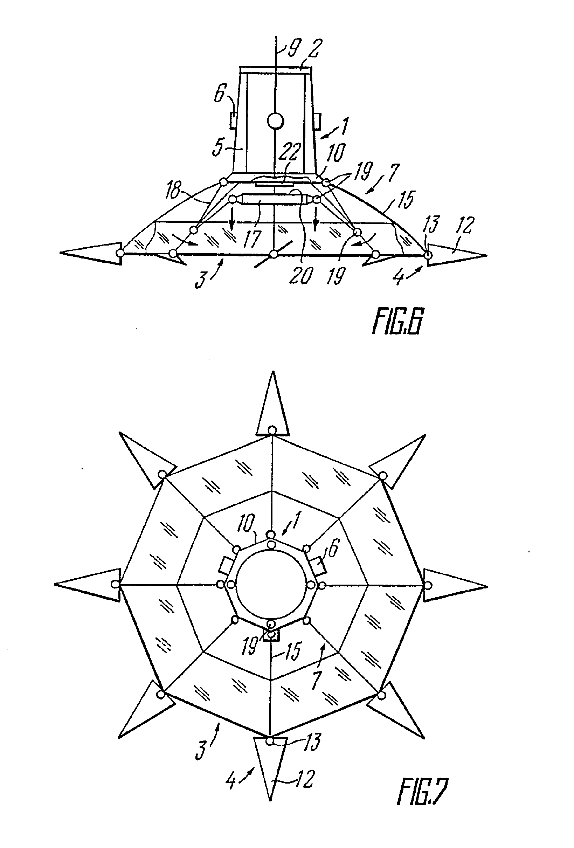

In certain cases, however, such as, for instance, during astrometric research, it is expedient to use spacecraft, according to the invention, wherein the rods 8 of the framework 7 are rigidly secured on the flange 10 of the body 1, which is clearly seen in Fig. 4.

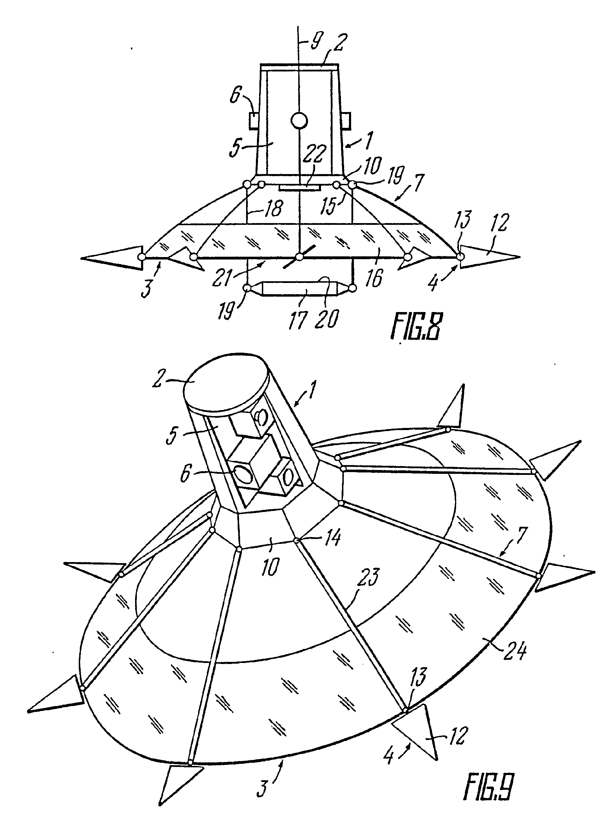

The embodiment of a spacecraft, according to the invention, illustrated in Figs 5-8 is similar to the embodiment shown in Fig. 4.

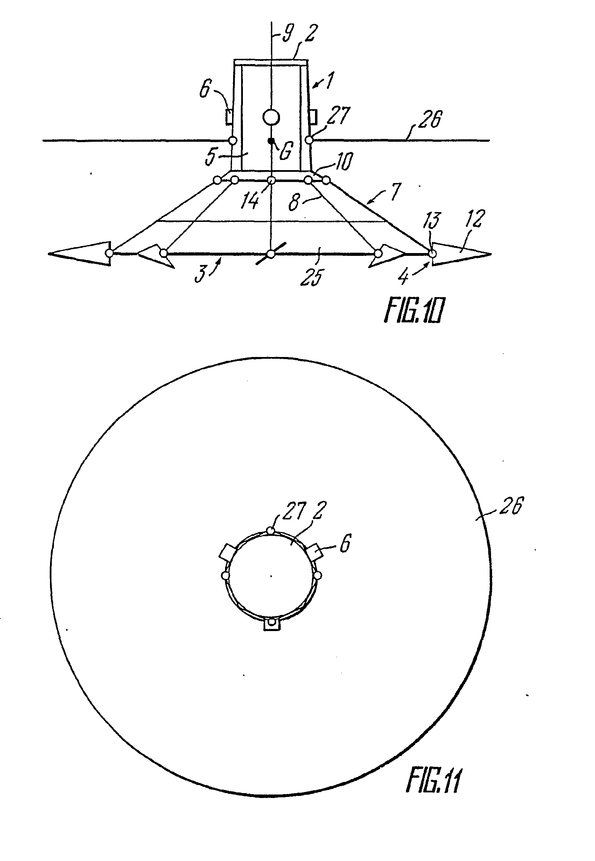

The difference consists in that the framework 7 (Fig. 5) includes rods 15 forming a truncated body of revolution with an axis aligned with the longitudinal axis 9 (Fig. 6) of the spacecraft and with edges which are generatrices of the body of revolution.

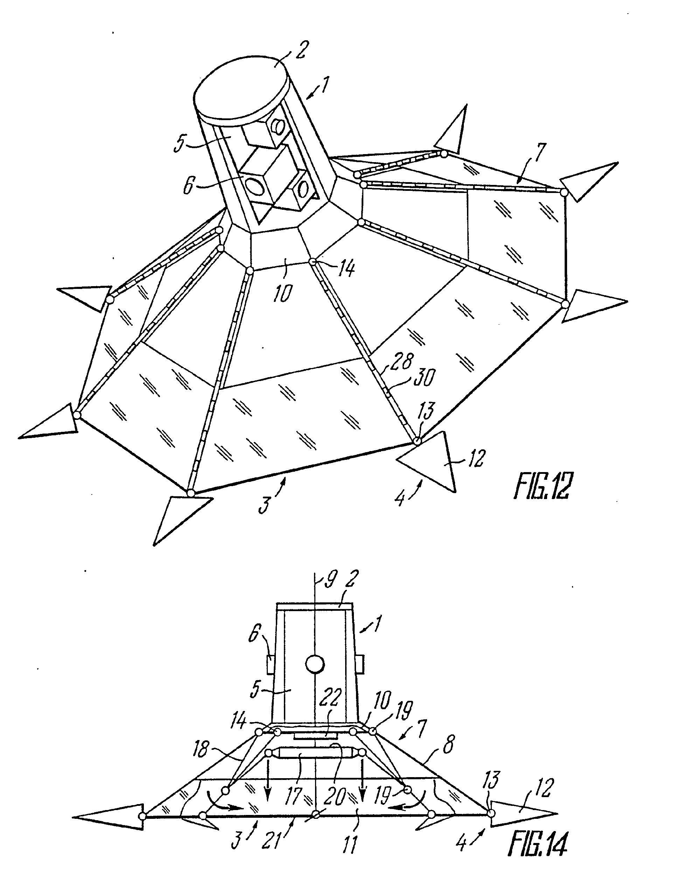

In the given embodiment of the spacecraft, according to the invention, a surface of a solar sail 16 (Fig. 5) opposite to a surface facing the Sun is also reflecting, which is clearly seen in Fig. 7.

On the side of the end surface carrying the rods 15 of the framework 7, the body 1 (Fig. 6) has a cover 17 installed thereon with the possibility of displacement along the longitudinal axis 9 of the spacecraft with the aid of hinged members including levers 18 hingedly coupled with the aid of hinges 19 with the flange 10, with one another and with the cover 17.

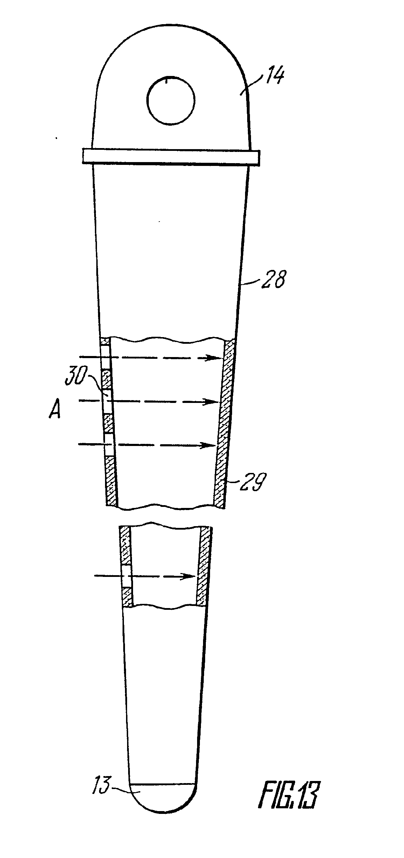

A surface 20 (Fig. 8) of the cover 17, facing the body 1, is reflecting and forms, jointly with the reflecting surface of the solar sail 16, opposite to the surface facing the Sun, a telescope 21. In this case, a receiving arrangement 22, e.g., a photodetector or a radio receiver, is provided in the body 1 on an end surface on the side of this telescope 21.

In the embodiment of the spacecraft being described herein, according to the invention, the rods 17 of the framework 7 are generatrices of the truncated body of revolution as presented in Fig. 5.

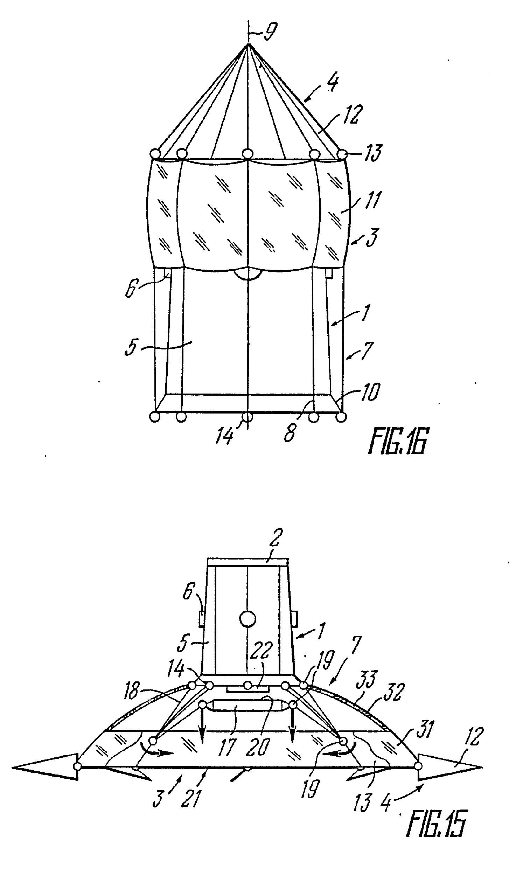

However, use may well be made of a truncated body of revolution in the form of a cone formed by generatrices in the form of rods 23 (Fig. 9) of the framework 7 with a solar sail 24 secured thereon.

The embodiment of the spacecraft presented in Figs 10 and 11 is similar to that illustrated in Figs 1-3.

The difference consists in that a surface of a solar sail 25 (Fig. 10) facing the Sun is reflecting in order to rule out the propelling moment arising due to non-uniform tension of the film and resulting in the spacecraft twisting around the longitudinal axis 9.

The body 1 (Figs 10 and 11) of the solar sail 25 is provided with a protective flat and round screen 26, transparent to sunlight, secured on the body 1 in such a manner that its plane passes through the center G of mass of the spacecraft, according to the invention. The screen 26 is secured on the body 1 with the aid of hinges 27 in such a way that it may be folded in the travelling position.

This embodiment of the spacecraft, according to the invention, may be used for high-precision astrometric photography of the stellar sky with a view to making a star catalogue.

The embodiment of the spacecraft, according to the invention, illustrated in Figs 12 and 13 is similar to that shown in Figs 1-3.

The difference consists in that rods 28 (Figs 12 and 13) of the framework 7 of the unit 3 are hollow, and their walls 29 (Fig. 13) facing the Sun are provided with holes 30.

The holes 30 are located on one generatrix of the rods 28, equidistant from one another, as shown in Figs 12 and 13.

However, the holes may be located on several generatrices of the rods.

The rods 28 are made of carbon plastic.

Figs 14 and 15 below show yet another two embodiments of the proposed spacecraft.

The embodiment of the spacecraft illustrated in Fig. 14 is similar to that shown in Figs 1-3.

The difference consists in that it has a telescope 21 made in a manner similar to the telescope 21 presented in Figs 5-8.

The surface of the solar sail 11 facing the Sun may be both reflecting, as shown in Fig. 14, and absorbing.

The embodiment of the spacecraft shown in Fig. 15 is similar to the one presented in Figs 5-8.

The difference consists in that the surface of a solar sail 31 (Fig. 15) facing the Sun is made absorbing. Besides, rods 32 of the framework 7 have holes 33, as in the spacecraft shown in Figs 12 and 13, and the rods 32 are made of carbon plastic.

The operating principle of the spacecraft, according to the invention, consists in the following.

When placing the proposed spacecraft shown in Figs 1-3 in a planned orbit, the craft is in the travelling position, shown in Fig. 16, with the rods 8 lifted and the control surfaces 12 of the fine solar orientation unit 4 folded, to form a pyramid over the end surface of the body 1 facing the Sun. The solar sail 11 of the coarse solar orientation unit 3 is also in the folded position.

The spacecraft in orbit, the solar sail 11 (Fig. 1) unfolds and tightens due to rotation of the rods 8, after which the spacecraft is set in the working position shown in Figs 1-3, whereat its longitudinal axis 9 (Fig. 2) is oriented on the Sun. In this position, any deviation of the spacecraft from the Sun-oriented direction due to solar pressure forces acting on the surface of the solar sail 11 (Fig. 1) gives rise to a moment returning the spacecraft to the initial position. It is noteworthy that owing to the rods 8 fastened to the flange 10 of the body 1 of the spacecraft accommodating the optical observation instruments 6 the center of mass of the spacecraft is above the upper edge of the solar sail 11, which makes the spacecraft statically stable.

To correct the position of the spacecraft, use is made of the control surfaces 12 of the fine solar orientation unit 4, which turn with the aid of the hinges 13. Rotation of said surfaces 12 (Fig. 2) around the axis perpendicular to the longitudinal axis 9 causes the spacecraft to twist around said axis.

Operation of the spacecraft shown in Fig. 4 is simil- ar to that described for the case of the spacecraft illustrated in Figs 1-3, the only difference consisting in that in the travelling position the spacecraft is unfolded and has a rigid structure.

The operating principle of the spacecraft shown in Figs 5-8 and 9 is similar to that shown in Fig. 4.

The difference consists in that the spacecraft illustrated in Figs 5-8 and 9 is additionally provided with the cover 17 (Fig. 6) which closes the receiving arrangement 22 used for transforming the received signal (light or radio) into an electric signal.

In the working position, the cover 17 (Fig. 8) is drawn out with the aid of the levers 18, and the reflecting surface 20 of the cover 17 and the inner reflecting surface of the sail 16 form the telescope 21.

Operation of the spacecraft illustrated in Figs 10 and 11 differs in that in the working position the screen 26 opens over the surface of the solar sail 25 to protect the spacecraft against the action of charged particles creating a noxious moment of forces, which interfere in the orientation of the spacecraft. This is particularly important with the spacecraft used for astrometric research. To prevent the screen 26 from disturbing the orientation of the spacecraft, it is essential that its plane passes through the center G of mass of the spacecraft.

Operation of the spacecraft illustrated in Figs 12 and 13 is similar to that of the spacecraft presented in Figs 1-3.

The difference consists in that the sunrays penetrating into the holes 30 of the rods 28 uniformly heat them, thereby reducing deformation of said rods 28, which are constantly illustrated by the Sun on one side.

The operating principle for the spacecraft shown in Figs 14 and 15 is similar to that of the spacecraft illustrated in Figs 5-8.

The proposed spacecraft is rather simple, has a long service life and is reliable in operation.

The spacecraft, according to the invention, ensures such a position of the solar sail relative to the center of mass of the spacecraft whereat its orientation on the Sun is stable.

Orientation of the spacecraft ensuring its twisting around the axis directed to the Sun permits uninterrupted photography of the stellar sky during the entire period of its existence, which makes it possible to draw up a common worldwide equiaxial triangulation stellar network.

Of special importance in conducting high-precision plasma physics research is minimal contamination of the environment around the spacecraft.

## Industrial Applicability

The proposed spacecraft is intended for exploration of the Sun, carrying out plasma physics research in outer space, and also for photographing the stellar sky in drawing up a star catalogue.

The spacecraft, according to the invention, may be used as a parent vehicle in building a satellite system. Using the measurements obtained with the aid of the spacecraft and their joint analysis will make it possible to make considerable headway both in the understanding of the nature of the solar-earth connection and of the magnetosphere physics and in the solution of a number of outstanding physical problems in astrophysics, plasma physics and thermonuclear research.

SUBJECT OF THE INVENTION

1. A spacecraft comprising a body (1) made in the form of an elongated body shaped as a regular polygon in its cross-section and carrying a coarse solar orientation unit (3) of the spacecraft, a fine solar orientation unit (4) made in the form of control surfaces (12) rotatable around an axis perpendicular to a longitudinal axis (9) of the spacecraft, and optical observation instruments (6), c h a r a c t e r i z e d  by that the coarse solar orientation unit (3) comprises a framework (7) consisting of rods (8) forming a truncated pyramid with an axis aligned with the longitudinal axis (9) of the spacecraft, which are the edges of the pyramid and whose one ends making up the base of the framework (7) are secured on an end surface of the body (1) opposite to an end surface oriented on the Sun and also comprises a solar sail (11) secured on the rods (8) of said framework (7) symmetrically with the longitudinal axis (9) of the spacecraft, the control surfaces (12) of the fine solar orientation unit (4) of the spacecraft being secured on the other ends of the rods (8) of the framework (7) with the possibility of additional rotation around another two axes perpendicular to the first said axis.

2. A spacecraft comprising a body (1) made in the form of an elongated body shaped as a regular polygon in its cross-section and carrying a coarse solar orientation unit (3) of the spacecraft, a fine solar orientation unit (4) made in the form of control surfaces (12) rotatable around an axis perpendicular to a longitudinal axis (9) of the spacecraft, and optimal observation instruments (6), c h a r a c t e r i z e d  by that the coarse solar orientation unit (3) of the spacecraft comprises a framework (7) consisting of rods (15) forming a truncated body of rotation with an axis aligned with the longitudinal axis (9) of the spacecraft, which are generatrices of the body of rotation and whose one ends making up the base of the framework (7) are secured on an end surface of the body (1) opposite to an end face of the body (1) oriented on the Sun, and also comprises a solar sail (16) secured on the rods (15) of said framework (7) symmetrically with the longitudinal axis (9) of the spacecraft, the control surfaces (12) of the fine solar orientation unit (4) of the spacecraft being secured on the other ends of the rods (15) of the framework (7) with the possibility of additional rotation around another two axes perpendicular to the first said axis.

3. A spacecraft as claimed in Claim 1, c h a r a c - t e r i z e d by that the surface of a solar sail (25) facing the Sun is absorbing.

4. A spacecraft as claimed in Claim 2, c h a r a c - t e r i z e d by that the surface of a solar sail (31) facing the Sun is absorbing.

5. A spacecraft as claimed in Claim 1, c h a r a c - t e r i z e d by that the rods (8) of the framework (7) of the coarse solar orientation unit (3) of the spacecraft are secured on an end surface of the body (1) with the possibility of displacement in a plane passing through the longitudinal axis (9) of the spacecraft.

6. A spacecraft as claimed in Claim 2, c h a r a c - t e r i z e d by that rods (23) of the framework (7) of the coarse solar orientation unit (3) of the spacecraft are secured on an end surface of the body (1) with the possibility of displacement in a plane passing through the longitudinal axis (9) of the spacecraft.

7. A spacecraft as claimed in Claim 3, c h a r a c - t e r i z e d by that the rods (8) of the framework (7) of the coarse solar orientation unit (3) of the spacecraft are secured on an end surface of the body (1) with the possibility of displacement in a plane passing through the longitudinal axis (9) of the spacecraft.

8. A spacecraft as claimed in Claim 4, c h a r a c - t e r i z e d by that the rods (23) of the framework (7) of the coarse solar orientation unit (3) of the spacecraft are secured on an end surface of the body (1) with the possibility of displacement in a plane passing through the longitudinal axis (9) of the spacecraft.

9. A spacecraft as claimed in Claim 1, c h a r a c - t e r i z e d by that the surface of the solar sail (11) opposite to the surface facing the Sun is reflecting, and the body (1) on the side of the end surface carrying the rods (8) of the framework (7) of the coarse solar orientation unit (3) has a cover (17) fitted thereon with the possibility of displacement along the longitudinal axis (9) of the spacecraft, a surface (20) of the cover (17) facing the body (1) is reflecting and forming a telescope (21) with the reflecting surface of the solar sail (11) opposite to the surface facing the Sun.

10. A spacecraft as claimed in Claim 2, c h a r a c - t e r i z e d by that the surface of the solar sail (16) opposite to the surface facing the Sun is reflecting, and the body (1) on the side of the end surface carrying the rods (15) of the framework (7) of the coarse solar orientation unit (3) has a cover (17) fitted thereon with the possibility of displacement along the longitudinal axis (9) of the spacecraft, the surface (20) of the cover (17) facing the body (1) is reflecting and forming a telescope (21) with the reflecting surface of the solar sail (16) opposite to the surface facing the Sun.

11. A spacecraft as claimed in Claim 3, c h a r a c - t e r i z e d by that the surface of a solar sail (31) opposite to the surface facing the Sun is reflecting, and the body (1) on the side of the end surface carrying rods (32) of the framework (7) of the coarse orientation unit (3) has a cover (17) fitted thereon with the possibility of displacement along the longitudinal axis (9) of the spacecraft, the surface (20) of the cover (17) facing the body (1) being reflecting and forming a telescope (21) with the reflecting surface of the solar sail (21) opposite to the surface facing the Sun.

12. A spacecraft as claimed in Claim 4, c h a r a c - t e r i z e d by that the surface of a solar sail (31) opposite to the surface facing the Sun is reflecting, and the body (1) on the side of the end surface carrying the rods (32) of the framework (7) of the coarse orientation unit (3) has a cover (17) fitted thereon with the possibility of displacement along the longitudinal axis (9) of the spacecraft, the surface (20) of the cover (17) facing the body (1) being reflecting and forming a telescope (21) with the reflecting surface of the solar sail (31) opposite to the surface facing the Sun.

13. A spacecraft as claimed in any of the Claims 5-8, c h a r a c t e r i z e d by that the surface of the solar sail (16) opposite to the surface facing the Sun is reflecting, and the body (1) on the side of the end surface carrying the rods (15) of the framework (7) of the coarse orientation unit (3) has a cover (17) fitted thereon with the possibility of displacement along the longitudinal axis (9) of the spacecraft, the surface of the cover (17) facing the body (1) being reflecting and forming a telescope (21) with the reflecting surface of the solar sail (16) opposite to the surface facing the Sun.

14. A spacecraft as claimed in any of the Claims 1-12, c h a r a c t e r i z e d by that rods (28) of the framework (7) of the coarse solar orientation unit (3) are made hollow and their walls facing the Sun are provided with holes (30).

15. A spacecraft as claimed in Claim 13, c h a r a c t e r i z e d by that rods (32) of the framework (7) of the coarse solar orientation unit (3) of the spacecraft are made hollow and their walls facing the Sun are provided with holes (33).

16. A spacecraft as claimed in Claim 14, c h a r a c t e r i z e d by that the holes (30) are located on at least one generatrix of the rods (28), equidistant from one another.

17. A spacecraft as claimed in Claim 15, c h a r a c t e r i z e d by that the holes (33) are located on at least one generatrix of the rods (32), equidistant from one another.

18. A spacecraft as claimed in Claim 16 or 17, c h a r a c t e r i z e d by that the rods (28) of the framework (7) of the coarse solar orientation unit (3) are made of carbon plastic.

19. A spacecraft as claimed in any of the Claims 1-12, c h a r a c t e r i z e d by that the control surfaces (12) of the fine solar orientation unit (4) are shaped as triangles.

20. A spacecraft as claimed in Claim 13, c h a r a c t e r i z e d by that the control surfaces (12) of the fine solar orientation unit (4) are shaped as triangles.

21. A spacecraft as claimed in Claim 14, c h a r a c t e r i z e d by that the control surfaces (12) of the fine solar orientation unit (4) are shaped as triangles.

22. A spacecraft as claimed in any of the Claims 1 - 12, c h a r a c t e r i z e d by that it incorporates a protective flat and round screen (26), transparent to sunlight, secured on the body (1) in such a manner that its plane passes through the center (G) of mass of the spacecraft.

FIG.1

FIG.3

FIG.2

FIG.4

FIG.5

FIG.6

FIG.7

FIG.8

FIG.9

FIG.10

FIG.11

FIG.12

FIG.14

FIG.13

FIG.16

FIG.15

# INTERNATIONAL SEARCH REPORT

International Application No PCT/SU 89/00295

## I. CLASSIFICATION OF SUBJECT MATTER (if several classification symbols apply, indicate all)

According to International Patent Classification (IPC) or to both National Classification and IPC

$IPC^5$ – B 64 G 1/40, 1/44

## II. FIELDS SEARCHED

### Minimum Documentation Searched

| Classification System | Classification Symbols |
|---|---|
| $IPC^4$ | B 64 G 1/22, 1/40, 1/44 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No |
|---|---|---|
| A | US,A,4426052 (SOCIETE NATIONALE INDUSTRIELLE AEROSPATIALE) 17 January 1984 (17.01.84),see figure 1,column 3,lines 46–68; column 4,lines 28–45; column 5,lines 8–28 (cited in the description) | 1,2,5,7,8 |
| A | US,A,4614319 (KIM.E.DREXLER), 30 September 1986 (30.09.86) see figures 2-4; figures 1(A); 1(B); 1(C); 1(D); 1(E), 1(F); 1(G); 1(H); | 1,2,19,21 |
| A | V.I.Popov "Systemy orientatsii i stabilizatsii Kosmicheskikh apparatov",1977, Mashinostroenie (Moscow) see pages 54–59, 156 | 1–4,14;15 |
| A | E.N.Polykhova "Kosmichesky polet s solnechnym parusom," 1986, Naukos (Moscow), see pages 150,282,283 | 9,13,22 |
| A | Astronavtika i raketodinamika", ekspressinformatsia", N. 24,1976,VINITI (Moscow) see pages 11,12,14 | 5–8,10–13 |
| A | Astronovtika i raketodinamika",ekspressinformatsia N.6, 1980,VINITI (Moscow) see pages 1,2 | 14–18 |

## IV. CERTIFICATION

| Date of the Actual Completion of the International Search | Date of Mailing of this International Search Report |
|---|---|
| 19 January 1990 (19.01.90) | 14 March 1990 (14.03.90) |

| International Searching Authority | Signature of Authorized Officer |
|---|---|
| ISA/SU | |